# EUROPÄISCHE PATENTANMELDUNG

(11) **EP 1 505 195 A2**
(43) Veröffentlichungstag der Anmeldung: **09.02.2005**
(21) Anmeldenummer: 04018324.6
(22) Anmeldetag: 03.08.2004
(51) Int. Cl.: D06F 75/36, D06F 75/38

(54) **Verfahren zur Herstellung von Bügeleisen**

(30) Priorität: 08.08.2003 DE 10336752; 26.06.2004 DE 202004010054 U
(71) Anmelder: Ticona GmbH, 65451 Kelsterbach (DE)
(72) Erfinder: Essinger, Jörg, 64367 Mühltal (DE); Riecke, Jürgen, 65929 Frankfurt (DE)

(57) **Zusammenfassung**

Die vorliegenden Erfindung betrifft ein Verfahren zur Herstellung von Bügeleisen, umfassend das Zusammenfügen von einem Gehäuse, einem Hitzeschild und einer beheizbaren Bügelsohle, wobei die Bügelsohle mit dem Hitzeschild über Distanzstücke verbunden ist, die mit der Bügelsohle durch Spritzgussverfahren verbinden werden.

## Beschreibung

Die vorliegende Erfindung betrifft Verfahren zur Herstellung von Bügeleisen.

Elektrische Bügeleisen sind seit langem bekannt und werden kommerziell in großem Maßstab verkauft. So beschreibt beispielsweise die Offenlegungsschrift DE 19705 181 ein derartiges Bügeleisen. Diese Bügeleisen weisen im Allgemeinen eine Bügelsohle aus Metall sowie ein Gehäuse auf, wobei das Gehäuse im Allgemeinen aus Polyolefinen, insbesondere Polypropylen gefertigt ist.

Aufgrund der hohen Hitze, die von der Bügelsohle ausgeht, wird zwischen dem Gehäuse und der Bügelsohle ein Hitzeschild angebracht, das über Distanzstücke mit der Bügelsohle verbunden ist. Das Hitzeschild wird im Allgemeinen aus einem Kunststoff gefertigt, der eine hohe Erweichungstemperatur aufweist, die üblicherweise mindestens 130° C beträgt.

Die Distanzstücke stehen unmittelbar im Kontakt zur Bügelsohle, die eine Temperatur von ca. 200°C bis 250°C aufweisen kann. Die Distanzstücke werden aus Werkstoffen hergestellt, die Wärme schlecht leiten. Hierzu gehören unter anderem keramische Werkstoffe oder spezielle Kunststoffe, wie Polyphenylensulfid (PPS).

Im Allgemeinen wird die Bügelsohle mit den Distanzstücken durch Schrauben oder Kleben verbunden. Dementsprechend ist menschliche Arbeitskraft zum Zusammenfügen notwendig. Nachteilig hieran sind einerseits die hohen Kosten sowie andererseits eine sehr schwankende Qualität, die aufgrund von unkonzentrierter Arbeitsweise auftreten kann.

In Anbetracht des Standes der Technik ist es nun Aufgabe der vorliegenden Erfindung, Verfahren zur Herstellung von Bügeleisen anzugeben, die kostengünstig durchgeführt werden können. Zugleich sollte das neue Verfahren die Herstellung von Bügeleisen mit einer hohen und gleichbleibenden Qualität ermöglichen.

Eine weitere Aufgabe bestand darin, ein Verfahren zur Verfügung zu stellen, mit dessen Hilfe qualitativ hochwertige Bügeleisen hergestellt werden können.

Gelöst werden diese sowie weitere nicht explizit genannte Aufgaben, die jedoch aus den hierin einleitend diskutierten Zusammenhängen ohne weiteres ableitbar oder erschließbar sind, durch Verfahren zur Herstellung von Bügeleisen mit allen Merkmalen des Anspruchs 1. Zweckmäßige Abwandlungen des erfindungsgemäßen Verfahrens werden in den auf Anspruch 1 rückbezogenen Ansprüchen unter Schutz gestellt.

Dadurch, daß man die Distanzstücke mit der Bügelsohle mit Spritzgussverfahren verbindet, gelingt es in nicht vorhersehbarer Weise, ein Verfahren zur Herstellung von Bügeleisen umfassend das Zusammenfügen von einem Gehäuse, einem Hitzeschild und einer beheizbaren Bügelsohle, wobei die Bügelsohle mit dem Hitzeschild über Distanzstücke verbunden ist, zur Verfügung zu stellen, die besonders kostengünstig durchführbar sind.

Zugleich lassen sich durch die erfindungsgemäßen Verfahren eine Reihe weiterer Vorteile erzielen. Hierzu gehören u. a.:
- Das Verfahren der vorliegenden Erfindung ist einfach in der Durchführung.
- Mit Hilfe des vorliegenden Verfahrens können Bügeleisen mit einer sehr hohen Qualität hergestellt werden, wobei insbesondere eine gleichbleibende Qualität erzielt wird.
- Des weiteren können durch das erfindungsgemäße Verfahren arbeitsaufwendige Schritte bei der Montage von Bügeleisen maschinell durchgeführt werden.

Bügeleisen sind an sich seit langem bekannt und beispielsweise in DE 197 05 181 A1 beschrieben. Zur Herstellung dieser Bügeleisen wird ein Gehäuse, ein Hitzeschild sowie eine beheizbare Bügelsohle zusammengefügt, wobei die Bügelsohle mit dem Hitzeschild über Distanzstücke verbunden wird. Die Bestandteile eines gemäß dem vorliegenden Verfahren hergestellten Bügeleisens entsprechen hierbei den Komponenten, die auch zur Herstellung von bekannten Bügeleisen eingesetzt werden.

Der Begriff Bügelsohle umfasst neben der zum Bügeln verwendeten Metallfläche auch die sich hierauf befindlichen Heizelemente und weitere Bestandteile aus Metall, die ohne Wärmeisolierung mit der zum Bügeln verwendeten Metallfläche in Kontakt stehen.

Erfindungsgemäß werden die Distanzstücke mit dem Bügeleisen durch Spritzgußverfahren verbunden.

Spritzgußverfahren sind in der Fachwelt weithin bekannt, wobei derartige Verfahren auch dazu dienen, Metalle und Kunststoffe zu verbinden. Hierbei können die zu verbindenden Metallteile Mittel aufweisen, die zur Befestigung der Kunststoffe geeignet sind. Hierzu gehören insbesondere Hohlräume, Vorsprünge, Durchbrüche, Poller, Metallzapfen und/oder Stifte, die auf der Oberseite der Bügelsohle, beispielsweise auf der Abdeckung der Heizkammer, vorhanden sind bzw. aufgebracht werden. Des weiteren kann auch die Outsert-Technik dazu dienen, die Bügelsohle mit den Distanzstücken zu verbinden.

Die Outsert-Technik ist an sich bekannt und beispielsweise in polymere Werkstoffe, Höchst High Chem, Sonderdruck B 172 d, Präzise gespritzt und in technische Kunststoffe, Berechnen, Gestalten, Anwenden, C.3.5. Outsert-Technik mit Hostaform beschrieben.

Je nach Technik kann hierbei eine vorgefertigte Bügelsohle eingesetzt werden, die die notwendigen Heizelemente bereits umfaßt. Darüber hinaus können auch Bestandteile der Bügelsohle, beispielsweise eine zum Hitzeschild gewandte Platte zunächst mit den Distanzstücken verbunden werden, wobei anschließend die restlichen Bestandteile der Bügelsohle, beispielsweise Heizelemente sowie die zum Bügeln eingesetzte, vom Hitzeschild weggewandte Platte, montiert werden.

Die Distanzstücke werden einer großen Wärmebelastung über die Bügelsohle ausgesetzt. Dementsprechend werden diese Teile des Bügeleisens aus einem Kunststoff hergestellt, der eine hohe Erweichungstemperatur aufweist. Vorzugsweise beträgt diese Erweichungstemperatur gemäß IEC 89/336/CD (VDE 0471 Teil 10-2; thermische Kugeldruckprüfung) mindestens 220°C, besonders bevorzugt mindestens 250°C.

Gemäß einem besonderen Aspekt der vorliegenden Erfindung werden die Distanzstücke aus Kunststoffen hergestellt, die Polysulfon (PSU), Polyetherketon (PEK), Polyetheretherketon (PEEK), Polyphenylensulfid (PPS), Liquid Crystal Polymer oder spritzgiessbaren Duroplaste, beispielsweise Bulk Moulding Compound (BMC), umfassen. Diese Kunststoffe sind an sich bekannt und kommerziell unter den Handelsnamen ®Vectra, ®Ultem, ®Zenite und ®Fortron erhältlich.

Die Distanzstücke werden mit dem Hitzeschild verbunden. Zum Zusammenfügen von Hitzeschild und Distanzstücken können allgemein bekannte Verfahren eingesetzt werden. Hierzu gehört beispielsweise das Kleben.

Gemäß einem besonderen Aspekt der vorliegenden Erfindung wird das Hitzeschild durch Spritzgußverfahren mit den Distanzstücken verbunden. Im Unterschied zu üblichen Bügeleisen wird dabei ein Hitzeschild hergestellt, dessen zur Bügelsohle hin ausgerichteten Seite von außen gut zugänglich ist, so daß das Spritzgusswerkzeug im Bereich der Bügelsohle gut abschließt. Bei herkömmlichen Bügeleisen ist das Hitzeschild im allgemeinen so geformt, dass ein Teil der seitlichen Bügelsohle vom Hitzeschild abgedeckt wird.

Des weiteren kann auf die Distanzstücke Kunststoff aufgespritzt werden, der anschließend mit dem Hitzeschild verschweißt wird.

Gemäß einer weiteren bevorzugten Ausführungsform der vorliegenden Erfindung kann das Hitzeschild mechanisch mit den Distanzstücken verbunden werden. Beispielsweise kann ein Kopf nach dem Zusammensetzen von Distanzstücken und Hitzeschild auf die Distanzstücke durch Spritzguss aufgebracht werden. Problematisch ist hierbei jedoch vielfach das Abdichten mittels einem geeigneten Presssitz.

Vorzugsweise wird dementsprechend ein Teil des Kunststoffs nach dem Zusammenfügen des Hitzeschilds mit den Distanzstücken verformt, wobei üblich ein Teil des Kunststoffs erwärmt wird. Besonders vorteilhaft hierbei ist, dass die Hitzeschilde keinerlei Beschränkungen im Hinblick auf die äußere Form unterliegen, sodass übliche, allgemein bekannte Hitzeschilde eingesetzt werden können.

Derartige Verfahren sind dem Fachmann bekannt. Zu diesen gehört insbesondere das Warmnieten von Kunststoffen. Hierbei kann der Kunststoff beispielsweise über Stempel, Ultraschall und/oder Heissluft erwärmt werden. Nach der Erwärmung wird der Kunststoff üblich mit einem Werkzeug verformt, sodass die Distanzstücke mit dem Hitzeschild mechanisch verbunden werden.

Das Warmnieten wird beispielsweise in Ticona GmbH: Hostaform, Acetalcopolymerisat, Ausgabe Mai 2001 beschrieben. Des weiteren können Vorrichtungen zum Warmnieten von KLN Ultraschall GmbH, D-64646 Heppenheim kommerziell erworben werden.

Im Allgemeinen wird die Bügelsohle mit 2 bis 4 Distanzstücken mit dem Hitzeschild verbunden.

Das Hitzeschild wird vorzugsweise aus einem Kunststoff hergestellt, der eine Erweichungstemperatur von mindestens 130° C, vorzugsweise mindestens 140° C gemäß IEC 89/336/CD (VDE 0471 Teil 10-2; thermische Kugeldruckprüfung) aufweist. Dementsprechend kann das Hitzeschild auch aus Kunststoffen hergestellt werden, die Polysulfon (PSU), Polyetherketon (PEK), Polyetheretherketon (PEEK), Polyphenylensulfid (PPS), Liquid Crystal Polymer, spritzgiessbare Duroplaste, beispielsweise Bulk Moulding Compound (BMC), Polyester, hochtemperaturstabile Styrolcopolymere, beispielsweise Acrylnitril-Butadien-Styrol-Copolymer (ABS), Acrylsäureester-Styrol-Acrylnitril (ASA) oder Styrol-Acrylnitril-Copolymere (SAN), oder Polycarbonat (PC) umfassen.

Besonders bevorzugt sind hierbei Polyester. Zu den bevorzugten Polyestern gehören insbesondere Polyethylennaphthalat (PEN), Polyethylenterephthalat (PET), Polybutylenterephthalat (PBT) oder ein Blend aufweisend Polyethylenterephthalat, Polybutylenterephthalat und/oder Acrylsäureester-Styrol-Acrylnitril. Diese Kunststoffe sind von Ticona GmbH unter dem Handelsnamen ®Celanex und ®Impet kommerziell erhältlich.

Die zuvor genannten Kunststoffe können einzeln oder als Mischung von zwei oder mehr sowie weiteren, nicht genannten Kunststoffen eingesetzt werden.

Zur Verbesserung der mechanischen Eigenschaften kann der Kunststoff aus dem das Hitzeschild hergestellt wird, Füllstoffe aufweisen. Zu den bevorzugten Füllstoffen gehören Minerale, wie Kalk, Kreide und Talkum; Glasfasern sowie Glaskugeln.

Das Hitzeschild wird im allgemeinen nach dem Zusammenfügen von Bügelsohle, Distanzstücken und Hitzeschild mit dem Gehäuse verbunden.

Hierbei kann das Gehäuse nach Einbau der Elektronik mit dem Hitzeschild verbunden werden. In diesem Fall wird das Gehäuse vorzugsweise auf das Hitzeschild geschraubt. Darüber hinaus kann auch ein Teil des Gehäuses mit dem Hitzeschild durch Spritzgussverfahren verbunden werden, wobei anschließend die Elektronik in das Gehäuse eingebaut wird, wonach weitere Teile des Gehäuses mit den zuvor beschriebenen Teilen des Bügeleisen zusammengefügt werden können.

Im Allgemeinen werden Gehäuse für Bügeleisen aus Polyolefmen, vorzugsweise Polypropylen und/oder Polyethylen gefertigt.

Die zur Herstellung des Bügeleisens verwendeten Kunststoffe erreichen vorzugsweise eine Klassifizierung UL-V0 gemäß dem Underwriter Laboratories Test, ohne dass hierdurch eine Beschränkung erfolgen soll.

Im Allgemeinen werden die Bügeleisen eingefärbt, um modischen Vorlieben zu entsprechen. Dementsprechend wird das Gehäuse und das Hitzeschild vorzugsweise aus einem Kunststoff hergestellt, der eingefärbt werden kann. Hierzu gehören die zuvor genannten Polyolefine und Polyester.

Darüber hinaus zeigen bevorzugte Kunststoffe, aus denen das Gehäuse und das Hitzeschild gefertigt werden sowohl eine hohe Schlagzähigkeit gemäß ISO 179 von mindestens 30 kJ/m², vorzugsweise mindestens 40 kJ/m² sowie eine hohe elektrische Widerstandsfähigkeit, die beispielsweise über die elektrische Durchschlagsfestigkeit gemäß IEC 60243 von mindestens 20 kV/mm, vorzugsweise mindestens 30 kV/mm beträgt, ohne dass hierdurch eine Beschränkung erfolgen soll.

Insgesamt kann ein Bügeleisen beispielsweise über folgende Stufen hergestellt werden:
- Ein Durchbrüche (Bohrungen) aufweisendes Hitzeschild wird durch Spritzguss separat hergestellt, wobei die Form nicht durch das vorliegende Verfahren eingeschränkt wird.
- In einem Outsert-Technik-Werkzeug wird die obere Abdeckung der Heizkammer mit mindestens zwei, vorzugsweise mindestens drei stiftförmigen Outsert-Bauelementen bestückt, die als wärmeisolierende Distanzstücke dienen. Die stiftförmigen Outsert-Bauelementen sind vorzugsweise so geformt, dass ein Teil des Kunststoffes durch die Durchbrüche des Hitzeschilds geführt und zu einem Nietkopf verformt werden kann.
- In dem Outsert-Technik-Werkzeug wird das separat hergestellte Hitzeschild so positioniert, dass die stiftförmigen Outsert-Bauelementen der Heizkammerabdeckung durch die Durchbrüche (Bohrungen) des Hitzeschilds geführt werden.
- Anschließend werden im Outsert-Technik-Werkzeug mittels Warmformen Nietköpfe angebracht, sodass die Heizkammerabdeckung und das Hitzschild mechanisch verbunden werden.
- Nachfolgend werden die weiteren Bestandteile der Bügelsohle an die Heizkammerabdeckung und das Gehäuse auf das Hitzeschild abgebracht. Dies erfolgt mit üblichen Verfahren.

Des weiteren kann ein Bügeleisen beispielsweise über folgende Stufen hergestellt werden:
- Ein Durchbrüche (Bohrungen) aufweisendes Hitzeschild wird durch Spritzguss separat hergestellt, wobei die Form nicht durch das vorliegende Verfahren eingeschränkt wird.
- Vor der Montage der Bügelsohle werden an der Abdeckung der Heizkammer beispielsweise durch Nieten mindestens zwei, vorzugsweise mindestens drei Poller (Metallzapfen mit Hinterschnitt) angebracht. Anschließend wird die Bügelsohle montiert.
- In einem Spritzguss-Werkzeug wird die obere Abdeckung der Heizkammer mit mindestens zwei, vorzugsweise mindestens drei stiftförmigen Outsert-Bauelementen bestückt, die als wärmeisolierende Distanzstücke dienen. Die stiftförmigen Outsert-Bauelementen sind vorzugsweise so geformt, dass ein Teil des Kunststoffes durch die Durchbrüche des Hitzeschilds geführt und zu einem Nietkopf verformt werden kann.
- In dem Spritzguss-Werkzeug wird das separat hergestellte Hitzeschild so positioniert, dass die stiftförmigen Bauelementen durch die Durchbrüche (Bohrungen) des Hitzeschilds geführt werden.
- Anschließend werden im Spritzguss-Werkzeug mittels Warmformen Nietköpfe angebracht, sodass die Heizkammerabdeckung und das Hitzschild mechanisch verbunden werden.
- Nachfolgend werden die weiteren Bestandteile der Bügelsohle an die Heizkammerabdeckung und das Gehäuse auf das Hitzeschild abgebracht. Dies erfolgt mit üblichen Verfahren.

Die einzelnen Montageschritte sind prinzipiell austauschbar, sodass beispielsweise eine Abdeckplatte zunächst mit stiftförmige Bauelemente in einem Outsert-Technik-Werkzeug versehen wird, die anschließend zu einer Bügelsohle montiert wird. Danach kann die montierte Bügelsohle mit einem Hitzschild durch Warmnieten verbunden werden.

Das Verfahren der vorliegenden Erfindung vereinfacht die Herstellung von Bügeleisen, wobei das Zusammenfügen des Hitzeschilds mit der Bügelsohle in einem Werkzeug vollautomatisch erfolgen kann. Diese Vereinfachung erspart menschliche Arbeitskraft, sodass einerseits Kostenvorteile andererseits Qualitätsvorteile erzielt werden.

## Patentansprüche

1. Verfahren zur Herstellung von Bügeleisen, umfassend das Zusammenfügen von einem Gehäuse, einem Hitzeschild und einer beheizbaren Bügelsohle, wobei die Bügelsohle mit dem Hitzeschild über Distanzstücke verbunden ist, **dadurch gekennzeichnet, dass** man die Distanzstücke mit der Bügelsohle durch Spritzgussverfahren verbindet.

2. Verfahren gemäß Anspruch 1, **dadurch gekennzeichnet, dass** man das Hitzeschild mit den Distanzstücken durch Spritzgussverfahren verbindet.

3. Verfahren gemäß Anspruch 1, **dadurch gekennzeichnet, dass** man das Hitzeschild mechanisch mit den Distanzstücken verbindet.

4. Verfahren gemäß Anspruch 3, **dadurch gekennzeichnet, dass** man beim Verbinden des Hitzeschilds mit den Distanzstücken ein Teil der Kunststoffe erwärmt.

5. Verfahren gemäß Anspruch 4, dass man das Hitzeschild mit den Distanzstücken durch Warmnieten verbindet.

6. Verfahren gemäß einem der vorhergehenden Ansprüche, **dadurch gekennzeichnet**, das Hitzeschild aus einem Kunststoff herstellt, der eine Erweichungstemperatur von mindestens 130° C aufweist.

7. Verfahren gemäß einem der vorhergehenden Ansprüche, **dadurch gekennzeichnet, dass** die Distanzstücke aus einem Kunststoff hergestellt werden, der eine Erweichungstemperatur von mindestens 220°C aufweist.

8. Verfahren gemäß einem der vorhergehenden Ansprüche, **dadurch gekennzeichnet, dass** man die Distanzstücke aus einem Kunststoff herstellt, der Polysulfon, Polyetherketon, Polyetheretherketon, Polyphenylensulfid, Liquid Crystal Polymer oder Bulk Moulding Compound umfasst.

9. Verfahren gemäß einem der vorhergehenden Ansprüche, **dadurch gekennzeichnet, dass** man das Hitzeschild aus Polysulfon, Polyetherketon, Polyetheretherketon, Polyphenylensulfid, Liquid Crystal Polymer, spritzgiessbare Duroplaste, Polyester, hochtemperaturstabile Styrolcopolymere, oder Polycarbonat herstellt.

10. Verfahren gemäß Anspruch 9, **dadurch gekennzeichnet, dass** man Polyethylenterephthalat, Polybutylenterephthalat oder ein Blend aufweisend Polyethylenterephthalat und/oder Polybutylenterepthalat als Polyester einsetzt.

11. Verfahren gemäß einem der vorhergehenden Ansprüche, **dadurch gekennzeichnet, dass** der Kunststoff, aus dem das Hitzeschild hergestellt wird, Füllstoffe aufweist.

12. Verfahren gemäß Anspruch 11, **dadurch gekennzeichnet, dass** der Füllstoff Glasfasern umfasst.

13. Verfahren gemäß einem der vorhergehenden Ansprüche, **dadurch gekennzeichnet, dass** das Gehäuse aus Polypropylen und/oder Polyethylen hergestellt wird.

14. Verfahren gemäß einem der vorhergehenden Ansprüche, **dadurch gekennzeichnet, dass** die zur Herstellung des Bügeleisens verwendeten Kunststoffe eine Klassifizierung UL-V0 gemäß dem Underwriter Laboratories Test erzielt.

15. Verfahren gemäß einem der vorhergehenden Ansprüche, **dadurch gekennzeichnet, dass** das Gehäuse und das Hitzeschild aus einem Kunststoff hergestellt werden, der eingefärbt werden kann.

16. Verfahren gemäß einem der vorhergehenden Ansprüche, **dadurch gekennzeichnet, dass** das Gehäuse und das Hitzeschild aus einem Kunststoff hergestellt werden, der eine Schlagzähigkeit gemäß ISO 179 von mindestens 30 kJ/m² aufweist.

17. Verfahren gemäß einem der vorhergehenden Ansprüche, **dadurch gekennzeichnet, dass** das Gehäuse und das Hitzeschild aus einem Kunststoff hergestellt werden, der eine Durchschlagfestigkeit gemäß IEC 60243 von mindestens 20 kV/mm aufweist.

18. Verfahren gemäß einem der vorhergehenden Ansprüche, **dadurch gekennzeichnet, dass** das Gehäuse auf das Hitzeschild durch Spritzguss aufgebracht wird.

19. Verfahren gemäß einem der vorhergehenden Ansprüche, **dadurch gekennzeichnet, dass** die Bügelsohle mit den Distanzstücken durch Outsert-Technik verbunden wird.

20. Verfahren gemäß einem der vorhergehenden Ansprüche, **dadurch gekennzeichnet, dass** die Oberseite der Bügelsohle Mittel zur Befestigung aufweist, auf die die Distanzstücke gespritzt werden.

21. Verfahren gemäß Anspruch 17, **dadurch gekennzeichnet, dass** die Oberseite der Bügelsohle Hohlräume, Vorsprünge, Durchbrüche, Poller, Metallzapfen und/oder Stifte als Mittel zur Befestigung aufweist.
